# EUROPEAN PATENT APPLICATION

(11) **EP 3 031 311 A1**
(43) Date of publication of application: **15.06.2016**
(21) Application number: 14834920.2
(22) Date of filing: 01.08.2014
(51) Int. Cl.: A01B 73/06, A01B 63/00

(54) **TOWED AGRICULTURAL IMPLEMENT**

(30) Priority: 07.08.2013 ES 201300777
(71) Applicant: Paredes Lorente, Salvador, 30320 Murcia Fuente Alamo (ES)
(72) Inventor: Paredes Lorente, Salvador, 30320 Murcia Fuente Alamo (ES)
(74) Representative: Herrero Herranz, Eva
(86) International application number: PCT/ES2014/000143
(87) International publication number: WO 2015/018956

(57) **Abstract**

It consists of a trailer that can be attached to a tractor (10) or similar vehicle, which has a structure capable of supporting a number of agricultural tools (12 and 13), such as a rotovator or similar, such that with the limited power of the tractor vehicle (10) it is possible to work with several of such tools simultaneously since the trailer includes motors (8) to power the operation of the tools (12 and 13), where said tools (12 and 13) are fitted on a secondary structure (2) capable of folding in on itself to reduce its size to comply with traffic regulations for trailers during transport and where each tool (12) is powered by a motor (9) such that they can be operated independently of the rest, where the operation of the hydraulic arms (15) that raise the sections of the secondary structure (2) for the folding operation is also independent.

## Description

### OBJECT OF THE INVENTION

This invention relates to a mechanical assembly specifically designed to be incorporated as a trailer to a tractor or other similar vehicle, said mechanical means forming a structure supporting a number of agricultural tools, such as rotovators or similar, so that with a limited-power tractor vehicle it is possible to operate several of said tools simultaneously, providing the set of tools with the ability to operate independently of each other, as well as the possibility of modifying the centre of gravity of the assembly so that some can exert more or less pressure on the ground when working simultaneously.

More specifically, the trailer comprises a support structure where one end is connected to the tractor vehicle, forming on said structure a set of motors or power units that supply a number of agricultural tools fitted at the opposite end of the structure, having the particularity that said separate tools are arranged on an initial secondary structure having the particularity of being articulated such that the rear assembly can be folded to limit the total width of the trailer.

### SCOPE OF APPLICATION OF THE INVENTION

This invention will apply mainly in the agricultural machinery manufacturing industry and its application may also be extended to machinery for the construction sector and, in general, any type of activity where specific soil treatment is required.

### BACKGROUND OF THE INVENTION

Today the use of electromechanical agricultural tools is widespread and they are used for different kinds of site preparation work. Indeed, given their versatility, they can be used for other productive sectors such as earth movement for building sites. These tools are generally designed to act as a trailer hooked to a tractor vehicle, which tows and provides the torque required for operation.

Generally, the size of the towed tool is in accordance with the power of the towing vehicle, since the larger the size of the former, the more power the latter will require due to the increased weight. This will make the towing difficult because of the greater power needed to operate a larger and more complex mechanism. Another factor to consider is the weight of the tractor, because if it is not substantially greater than the weight of the trailer, the towing operation cannot be performed properly, especially in rough terrain like the surfaces on which this type of equipment usually works.

This greatly limits the productivity of a tractor with limited power, which will only be able to tow a small tool and therefore it will need a greater number of passes to prepare a particular land surface compared with another, more powerful vehicle that can tow a larger tool.

Furthermore, the width of the towed tool is a fundamental parameter in this type of work, since a greater width allows a lower number of passes on the same surface and if the tool has to be moved along the road to work in different areas, the width will be restricted by traffic regulations. Depending on the country, said width restriction varies and is around 3 metres. Thus, a larger tool must be disassembled for transportation by conventional roads, which would mean a significant reduction in the practical functionality of the equipment. It is known that there are tools for high-powered tractors consisting of two sections that can be raised thus solving the problem of the width; however, said tools have the problem that both sections work simultaneously, i.e. if one section is raised, the other is also raised and if there is an obstruction on one side (e.g. an irrigation pipe), when the section is raised to avoid a collision, the other section is also raised, leaving an area of untreated soil that will have to be treated later on. Furthermore, the inability to modify the centre of gravity of this tool causes the situation where, when there are two types of different land on each side of the tool, such as in the perimeter area of a plot where the soil is usually harder than the interior areas of the same plot, the tool will tilt because the working parts will stick in the ground offering more resistance in one section than in the other. A tool that makes it possible to change the position of the centre of gravity would allow it to work horizontally at all times by increasing or decreasing the pressure of the working parts of the tool on the ground on both sides.

Therefore, the appearance of a set of mechanical and/or electrical means to make it possible to increase the size of the agricultural tool towed by a tractor with limited power would be desirable, or it would be desirable to increase the number of tools to be towed and make it possible for it to be transported by road without the need for complicated disassembly operations, also offering the possibility of modifying the position of its centre of gravity and working with all the elements simultaneously or only with some of them to resolve certain situations such as the above.

This invention solves the above problems by forming a towable main support structure with a number of motors that provide the power to a number of agricultural tools arranged on another folding secondary structure fitted on the rear end of the main structure, both structures supported on an axle such that the weight of all the elements creates a movement transmitted to the tractor vehicle by means of the coupling, thereby providing the traction required to tow the unit.

The German Patent DE3728654 A1 (Schaar J) is well known and describes a trailer coupled to a tractor with little power, supported by an axle with two wheels that supports a structure with a cultivator and a motor with fuel tanks. This unit is duly counterweighted to prevent the tractor from being raised by the torque exerted by the cultivator. Despite the fact that it is conformed as a trailer similar to that described herein, where the trailer has a tool at its rear end and a motor on the structure supported by the axle with two wheels, there is a significant difference regarding the invention referred to in this application consisting of the fact that this trailer does not provide any option for modifying the position of the centre of gravity of the trailer, so that the balance problem would not be resolved when working in areas with different levels of hardness on both sides of the trailer or when only some of the tools at the rear are to be used.

Document DE19951900 A1 (KVERNELAND ACCORD GMBH) is also known and describes an agricultural cultivator with a main structure, wheels, chassis parts, a coupling hitch and articulated side sections. The agricultural cultivator has side structures with tools that can be folded by means of a hydraulic cylinder so that the raised side sections do not exceed the vertical plane marked by the wheel exterior. This cultivator cannot work independently on each of the articulated side sections and the centre of gravity of the unit cannot be changed. Therefore, the problems discussed in the preceding paragraphs are not resolved.

Other documents that describe devices that have similarities with the invention applied for here appear in documents ES0448103 A1 (C VANDERLELY NV); ES2209792 T3 (Kuhn-Huard S.A.); ES2275807 T3 (DEERE & COMPANY); ES 2293373 T3 (Kuhn, S.A).All these documents describe tools that can be folded for easy transport when not working. However, none of these documents contain features that make it possible to work independently on each of the folding sections or change the centre of gravity of the device.

For these reasons, we can say that the applicant is not aware of the existence of any device with the features described above and a similar mechanism of operation, so that the invention is configured as an evident novelty. On this basis, the corresponding protection given to such inventions is applied for.

### DESCRIPTION OF THE INVENTION

The proposed agricultural tool comprises a main structure acting as a support and resting on an axle fitted with wheels and which has a predominantly elongated geometry, having at one end the corresponding hitching point for connection to the towing vehicle. After said hitching point the structure has a set of motors or power units (meaning any element capable of providing an axle with a rotational torque with suitable power), which are positioned on one or more platforms on the main structure for said purpose, the fuel tanks required to supply said motors or power units and, at the opposite end to the hitching point, a secondary structure also of a predominantly elongated geometry fitted perpendicular to the main structure and supporting the set of agricultural tools that work the soil.

It is important to highlight the fact that each tool has a motor or power unit so that each tool can work independently, with the option for having one or more on standby while the rest remain in operation.

The secondary structure consists of several sections connected to each other via articulated rotatory couplings. There will be a central section of the secondary structure to support a tool fixed to the main structure, forming the point of attachment between the two structures, while other sections will be able to rotate on a plane slightly perpendicular to the axle of the main structure so that the side sections can be raised to be in a position such that the vertical protrusion of the raised tools does not protrude from the vertical protrusion of the tool attached to the fixed section of the secondary structure. To achieve this, the articulation between the fixed and side sections of the secondary structure must be at a distance from the outer edge of the fixed tool equal to or greater than the height of the tool fitted to the side section of the secondary structure.

The secondary structure may also be formed by the same tools, such that there would be a tool fitted to the main structure while the rest would be fitted to it to complete the folding movement described hereunder.

To ensure the side stability of the unit when one or more of the side tools are raised, the axle on which the main structure rests must have a length such that the wheels or wheel unit at each end of the axle are fitted at the same horizontal distance from the axle of the main structure as the centre of gravity of the side tools in the raised position.

Since there is the possibility of working with one tool partially or fully raised and one lowered, this will mean that the centre of gravity of the unit will move sideways and may be in different positions. This feature will be advantageous in the case of land with different characteristics on either side of the trailer, so that, for example, if the ground on the right side is harder, it will suffice to slightly raise the tool on said side so that the pressure exerted by the tool on the ground is always equal on both sides and the trailer is not tilted.

Similarly, to ensure the stability of the unit, the main structure can be raised relative to the axle on which it is positioned such that in working position (with the side tools extended horizontally) said structure is raised above the axle to a suitable height for the tools to operate properly, whereas in the transport position (side tools raised) the structure will be lowered directly on to the axle so that the centre of gravity of the unit is as low as possible. For this purpose, a hydraulic cylinder will exert its thrust at a point on the central axle of the structure to guarantee the correct levelling of the unit at all times or by means of a pair of hydraulic arms that will be powered by the same bottle to ensure equal pressure on both at all times. The use of a hydraulic cylinder for this purpose stands out as the preferred option for raising the side tools, where all cylinders would be powered by the hydraulic unit of the tractor through the corresponding solenoid valves. In any case, the use of different methods for raising the structure and side tools will not alter the essence of the invention as they will be configured only as mere design options. It is important to highlight the fact that the hydraulic cylinders or any other lifting method will be powered separately to allow the lifting operation independently of each of the tools at all times, such that there can be one or several tools lowered while the rest remains fully or partly raised.

As indicated, the side sections of the secondary structure (as indicated above, said secondary structure may be formed by the coupling of the tools themselves, without a chassis forming the structure) can be raised in different ways, using hydraulic cylinders, pulleys or any other suitable design option.

As referenced above, the agricultural tools fitted on the secondary structure need to be powered by motors or power units. Since the motors and tools are positioned on opposite sides of the main structure, a gear of sufficient length is required to connect them and provide movement for the tool mechanism. In order to avoid excessive eccentricity in a rotating element of great length, it is necessary to have one or more intermediate supports fitted with bearings for the gear. Said supports may be formed by simple bearing flanges fitted at the ends, where it is advisable to make them rigid depending on the length to the point where the gear is fitted. In order to shorten as far as possible the length of the gear, tools may be fitted with the gear on the end closest to the motor. The tool fitted on the fixed structure section may be operated directly from the tractor, as there is a tool of the appropriate size, by an appropriate gear that will be supported at a suitable number of points as described for the aforementioned gears if necessary due to its length.

In an alternative design option, it is possible to eliminate the gears by fitting to the axle of the main structure one single motor which, accompanied by a pressure unit, would supply a hydraulic motor next to each of the tools, such that said tools can work independently of each other. With this option, it will only be necessary to fit each hydraulic motor with a hydraulic connection from the main pressure unit. In any case, the use of any other means to power the tool mechanisms would not be more than a mere design option that would not alter the essence of the invention.

To facilitate the movement of the motor gears fitted on the main structure with the tools on the secondary structure when they are raised, there is the advantageous possibility of fitting the motors to free-rotation platforms using any mechanism appropriate for said function.

Since current legislation on machine safety prevents the existence of accessible moving parts, there will have to be a safety mechanism to prevent the transmission of power to the tools when they are raised. This is possible automatically by means of a cable that connects the tool to the motor fuel intake valve, so that when the tool is raised, the cable tightens and acts on the valve by cutting off the fuel supply and automatically stopping the motor, thereby acting as a complement to the electronic regulations that usually govern this type of motor.

In order to reduce the weight of the structure, it will be made rigid by fitting tie cables to join the end of the side sections of the secondary structure in the working position with the main structure, where said cables will have a suitable connection system to allow rapid dismantling and removal when said side sections are to be raised.

One of the most important factors to consider in the design of this invention is the correct balance of loads on the main structure, since it is necessary to avoid the transmission of movement at the hitching point of the main structure with the motor in such a way that the latter is raised, which would prevent the trailer from being towed due to insufficient traction with the ground. For this purpose the main loads will be positioned on the main structure (secondary structure and motors) at a distance from the axle supporting the main structure so as to always ensure that the movement produced by the weight of the platform unit (including the weight of the motors or power units and fuel tanks) on the trailer support axle is greater than the movement produced by the weight of the secondary structure (including tools and side section lifting mechanism). This ensures that at the hitching point with the tractor, there will be a downward force to avoid any loss of traction in the latter.

The sides of the tools fitted on the moving parts of the secondary structure nearest to the central tool will have bars (bar understood as an element of the plough with a blade shape to break up and turn over the soil), which will have a height substantially greater than the tool itself, with the tapered side facing the direction of travel of the trailer such that, in working position, the side bars turn over the soil in the area between the tools that would not be worked by said tools. Similarly, at the rear of the tool, in the same area, there would be extensions to the panels of the side tools (panel understood as a moving part designed to flatten the ground after the tool has passed, with an articulated top and acting under its own weight or by means of springs that exert pressure on the ground) to flatten the ground in the area between the tools. There is also the possibility of replacing said panels with shaping units (shaping unit understood as a panel with protrusions that mark lines on the ground), in which case there would also be a side extension to cover the space between the central and side tools.

As a design option, if hydraulic cylinders are used, it is possible to connect the mechanism for adjusting the working height of the tool usually fitted to the hydraulic circuit so that said height can be controlled from the tractor.

The mechanical and/or electrical means comprising this invention will have their corresponding usual regulation mechanisms, controlled in the tractor cab by suitable hydraulic and electrical connections. In addition, all signalling and electrical equipment necessary for compliance with current traffic regulations of the location where the trailer is to be used will be fitted on the trailer structure and in the appropriate places.

### DESCRIPTION OF THE DRAWINGS

To complement the description that is being made and in order to facilitate better understanding of the specifications of the invention, illustrative, non-restrictive drawings are included as an integral part of this memorandum, described as follows:

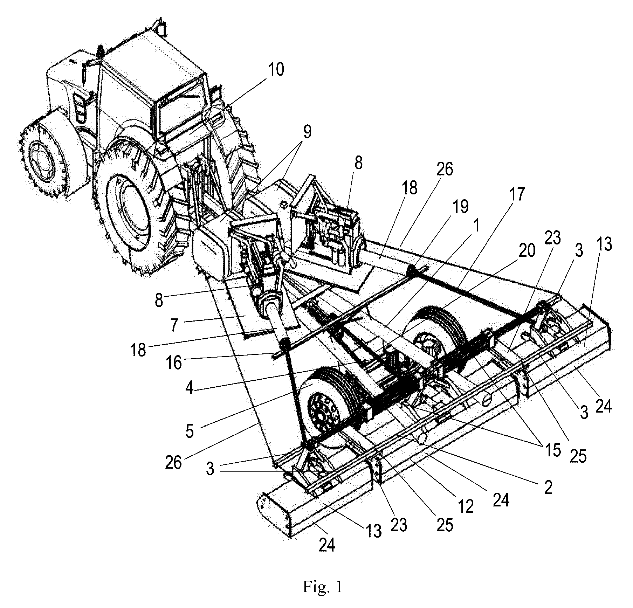

Fig. 1. This represents a view in perspective of the invention, showing the unit coupled to a tractor vehicle in working position with the side tools deployed. Thus, this and all the following figures show all the elements without their corresponding safety casing to show the components of the invention.

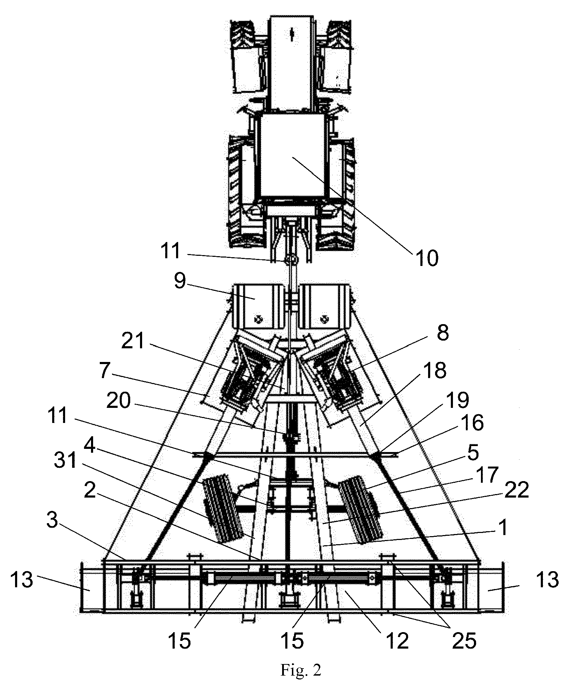

Fig. 2. This represents a layout view of the invention in working position.

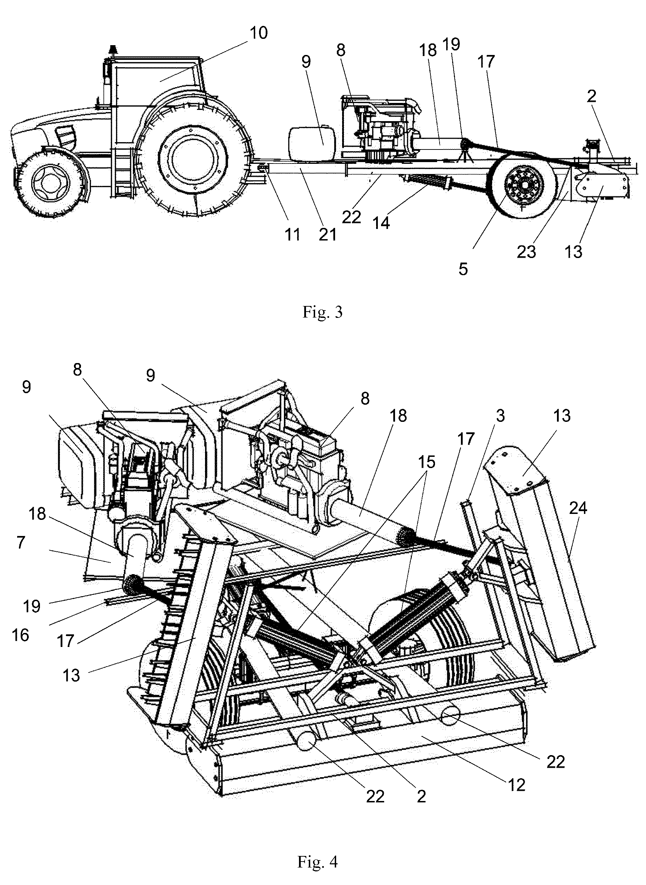

Fig. 3. This shows a section view of the invention in working position.
Fig. 4. This shows a view in perspective of the invention in transport position with the side tools raised.

### DESCRIPTION OF THE PREFERRED REALISATION

In view of the aforementioned figures and according to the numbering system that is adopted, they show a preferred realisation of the invention, which comprises the parts and elements indicated and described in detail below, where this example does not aim to limit the scope thereof in any way.

Based on a main support structure (1), which has a transversal axle (4) that is self-steering and has the wheels (5) on its ends and forms the chassis of the trailer that will be attached to the tractor vehicle (10). The axle (4) will have a suspension (6) to which a hydraulic cylinder (14) will be connected to vary the height at which the structure support (1) is fitted. Said support structure (1) is formed from hollow tubular metal sections that offer greater resistance to simultaneous forces in several directions (twisting, bending, traction...). The connection to the tractor (10) is via a quick-coupling unit (11) or any other suitable system for this purpose.

In the present example the main structure (1) is solved by three tubular sections forming a "Y", so that an initial coaxial section (21) with the longitudinal axle of the trailer makes it possible to hitch the tractor (10) at its end, branching said initial section into two inclined sections (22) so that the unit can support all the elements required to configure the invention without adding too much weight to the unit. In any case, any other design option will be valid for the realisation of this structure (1) without affecting the essence of the invention.

At the rear of the support structure (1), the secondary structure (2) supports the single tools (12 and 13) for working the soil. This secondary structure (2) consists of a central fixed part and articulated sections (3) with the possibility of rotation on a plane slightly perpendicular to the longitudinal axle of the main structure (1). The articulation (25) between the sections of this structure is made by bolts that join said structures such that they can rotate.

The fixed part of the secondary structure (2) supports a central tool (12), which receives the gear (20) from the tractor vehicle (10) to move its mechanism. However, the side tools (13) cannot be moved by said gear (20) as the tractor (10) does not have sufficient power, so they are powered by separate motors (8) fitted to the main structure (1) on suitable platforms (7). The side gears come from said motors (8) and, due to their length, they have been positioned on an intermediate support (16) fitted with bearings at the support point, allowing the differential (19) of the axle (18) to be positioned on them such that the palier (17) covers the remaining distance to the side tools (13).

The motors (8) have their fuel supply next to them in tanks (9) that can be positioned on the same platform (7) or on another attached platform.

The side tools (13) are raised in this example by hydraulic cylinders (15) pivotally attached to the fixed part of the secondary structure (2), such that with the cylinders in the fully extended position, said side tools (13 ) are at the height of the central tool (2), whereas when the cylinders (15) are contracted, the tool (13) is raised upright.

Attached to the side tools (13) on the sides closest to the central tool (12), there will be bars (23) fitted such that when they are in working position, said bars (23) occupy the entire space between the tools (12 and 13). Their function is to turn over the land that would not be worked by the tools (12, 13) and they will be fitted on the side tools (13) so as not to increase the width of the unit in transport position. Similarly, the panels (24) of the side tools (13) will be fitted with extensions in the remaining spaces with the panel of the central tool to flatten the ground once it has been turned over, positioning the extensions on said tools to limit the width of the vehicle with the tools contracted. Furthermore, these panels (24) may also have one or more bars on the front to mark and/or limit the size of the cultivation areas.

A new hydraulic cylinder (14) raises the main structure (1) with regard to the axle (4) so that the trailer can travel by road in compliance with the geometric constraints provided in the corresponding regulations.

The main structure (1) and the secondary structure (2) will be made rigid when the invention is in working position by means of a symmetrical pair of tie cables (26) connecting the two structures on the sides.

As a safety feature and as indicated above, there is a tie cable that connects the respective side tools (13) to their motor fuel intake valves (8) such that when the hydraulic cylinder (15) begins to raise said tool (13), the cable is tensioned, cutting off the fuel and thereby stopping the motor (8).

All the hydraulic cylinders (14 and 15) are powered from the tractor vehicle (10) in this example, although said elements can be powered from the motors themselves (8) using a suitable compressor or replacing the motors with hydraulic power units.

Having sufficiently described the nature of this invention, together with its realisation, further explanation is not considered necessary for an expert in the art to understand its scope and the benefits it provides, stating that, in its essence, it may be realised in other ways that differ in detail from that given by way of example, and which will also offer the indicated protection as long as its fundamental principle is not altered, changed or modified.

## Claims

1. TOWED AGRICULTURAL TOOL configured from a main support structure (1) on an axle (4) fitted with wheels (5), a secondary structure (2) anchored to the main structure and fitted at the rear with a number of agricultural tools (12 and 13), a connection for a trailer (11), motors (8) or power units, gears (17 and 20) and a number of hydraulic cylinders (14 and 15) **characterised in that** the secondary structure (2) has a series of tools (12 and 13) with several articulated sections of the secondary structure (3) relative to the fixed part of the secondary structure (2); where said articulated sections (3) have two tools (13) attached to them; where there is a number of hydraulic cylinders (15) connecting the fixed part of the secondary structure (2) to the articulated parts; where the side tools (13) are powered by side gears from separate motors (8) fitted on the main structure (1), where each of the tools (12 and 13) has a motor (8) or power unit and where each hydraulic cylinder (14 and 15) works independently from the rest, where the axle (4) on which the main structure is positioned (1) has a length such that the wheels (5) are at the same distance from the axle of the main structure (2), measured horizontally, as the centre of gravity of each of the side tools (13) in the raised position.

2. TOWED AGRICULTURAL TOOL according to claim 1, **characterized in that** the mechanism for raising the side tools (13) uses one or more pulleys (33) supported on an auxiliary structure (32).

3. TOWED AGRICULTURAL TOOL according to claim 1, **characterized in that** the main loads will be positioned on the main structure (secondary structure (2) and motors (8)) at a distance from the axle (4) such that the movement produced by the weight of the platform unit (7) (including the weight of the motors (8) or power units and fuel tanks (9)) on the trailer support axle (4) is greater than the movement produced on said axle (4) by the weight of the secondary structure (2) (including the tools (12 and 13) and side section (3) lifting mechanism (15)).

4. TOWED AGRICULTURAL TOOL according to claims 1 and 3, **characterized in that** the articulation between the fixed section and side section (3) of the secondary structure (2) must be at a distance from the outer edge of the fixed tool (12) equal to or greater than the height of the tool (13) fitted to the side section (3) of the secondary structure (2).

5. TOWED AGRICULTURAL TOOL according to claims 1, 3 and 4, **characterized in that** the secondary structure (2) is formed by the tools themselves (12 and 13), such that there would be a tool fitted to the main structure (12) while the rest (13) would be fitted to it to complete the folding movement.

6. TOWED AGRICULTURAL TOOL according to claim 1, **characterized in that** on the sides of the side tools (13) closest to the central tool (12) there are bars (23) which will have a height slightly greater than the tool itself (12), with the tapered side facing the direction of travel of the trailer.

7. TOWED AGRICULTURAL TOOL according to claims 1 and 6, **characterized in that** the sides of the tool (12) on the fixed part of the secondary structure (2) have panels (24) with extensions covering all the horizontal space between the side tools (13) and the central tool (12), where said panels (24) also have one or more bars fitted on the front.

8. TOWED AGRICULTURAL TOOL according to claim 1, **characterized in that** the platforms (7) on which the motors (8) are fitted are positioned on a rotary mechanism that allows them to rotate freely.

9. TOWED AGRICULTURAL TOOL according to claim 1, **characterized in that** the power from the power units to the tools on the secondary structure (2) is transmitted by hydraulic circuits that power a hydraulic motor fitted next to the tool (13).

10. TOWED AGRICULTURAL TOOL according to claim 1, **characterized in that** the power from the power units to the tools on the secondary structure (2) is transmitted by electrical circuits that power an electrical motor fitted next to the tool (13).

11. TOWED AGRICULTURAL TOOL according to claim 1, **characterized in that** the axle (4) is self-steering.
